# EUROPEAN PATENT APPLICATION

(11) **EP 4 843 796 A1**
(43) Date of publication of application: **25.11.2026**
(21) Application number: 26179617.1
(22) Date of filing: 19.05.2026
(51) Int. Cl.: B60C 13/00, B60C 13/02

(54) **TIRE**

(30) Priority: 20.05.2025 JP 2025083940
(71) Applicant: Toyo Tire Corporation, Itami-shi, Hyogo 664-0847 (JP)
(72) Inventor: TAKAGI, Yuki, Itami-shi, Hyogo, 664-0847 (JP)
(74) Representative: Müller-Boré & Partner Patentanwälte PartG mbB

(57) **Abstract**

To provide a tire that has high design characteristics, can be reduced in weight, and can reduce rolling resistance. A tire (1) includes a tread (4) and a sidewall (3). The sidewall (3) includes: a first region (311, 321) located at a position protruding from a sidewall reference surface (3a) which is a reference surface of the sidewall (3); and a second region (312, 313, 314, 322, 323) disposed adjacent to the first region (311, 321). A plurality of protrusions (110) protruding from a second region reference surface (SS) which is a reference surface of the second region (312, 313, 314, 322, 323) are arranged in the second region (312, 313, 314, 322, 323).

## Description

This application is based on and claims the benefit of priority from Japanese Patent Application No. 2025-083940, filed on 20 March 2025, the content of which is incorporated herein by reference.

### BACKGROUND OF THE INVENTION

### Field of the Invention

The present disclosure relates to a tire.

### Related Art

Conventionally, side blocks configured to protrude from a reference surface of a sidewall have been arranged to improve traction performance (for example, see Patent Document 1). Such side blocks not only enhance traction performance, but also improve cut resistance, and contribute to enhanced design characteristics because the side blocks provide a powerful and rugged appearance.

Patent Document 1: Japanese Unexamined Patent Application Publication No. 2022-168420

### SUMMARY OF THE INVENTION

As the height of the side blocks increases, traction performance and cut resistance are improved, and design characteristics can also be enhanced. On the other hand, as the height of the side blocks increases, the weight of the tire increases and air resistance also increases, so that rolling resistance tends to deteriorate.

An object of the present disclosure is to provide a tire that has high design characteristics, can be reduced in weight, and can reduce rolling resistance.

A tire of the present disclosure includes a tread and a sidewall, in which the sidewall includes: a first region located at a position protruding from a sidewall reference surface which is a reference surface of the sidewall; and a second region disposed adjacent to the first region, and in which a plurality of protrusions protruding from a second region reference surface which is a reference surface of the second region are arranged in the second region.

According to the present disclosure, it is possible to provide a tire that has high design characteristics, can be reduced in weight, and can reduce rolling resistance.

### BRIEF DESCRIPTION OF THE DRAWINGS

FIG. 1 is a side view illustrating a partially enlarged view of a tire 1 of the present embodiment as viewed from a tire axial direction;
FIG. 2 is a diagram illustrating a cross section of the tire 1 taken along the line indicated by the arrow A-A in FIG. 1;
FIG. 3 is a diagram illustrating a cross section of the tire 1 taken along the line indicated by the arrow B-B in FIGS. 1 and 2;
FIG. 4 is a perspective view illustrating a plurality of protrusions 110 disposed in a second region;
FIG. 5 is a cross-sectional view illustrating the plurality of protrusions 110 disposed in the second region, sectioning through the center of a protrusion 110;
FIG. 6 is a schematic diagram illustrating a first example of a second region reference surface SS;
FIG. 7 is a schematic diagram illustrating a second example of the second region reference surface SS;
FIG. 8 is a schematic diagram illustrating a third example of the second region reference surface SS;
FIG. 9 is a schematic diagram illustrating a fourth example of the second region reference surface SS;
FIG. 10 is a schematic diagram illustrating a fifth example of the second region reference surface SS; and
FIG. 11 is a schematic diagram illustrating a modified form of a side block 310.

### DETAILED DESCRIPTION OF THE INVENTION

Hereinafter, an embodiment for carrying out the present disclosure will be described with reference to the drawings.

### (Embodiment)

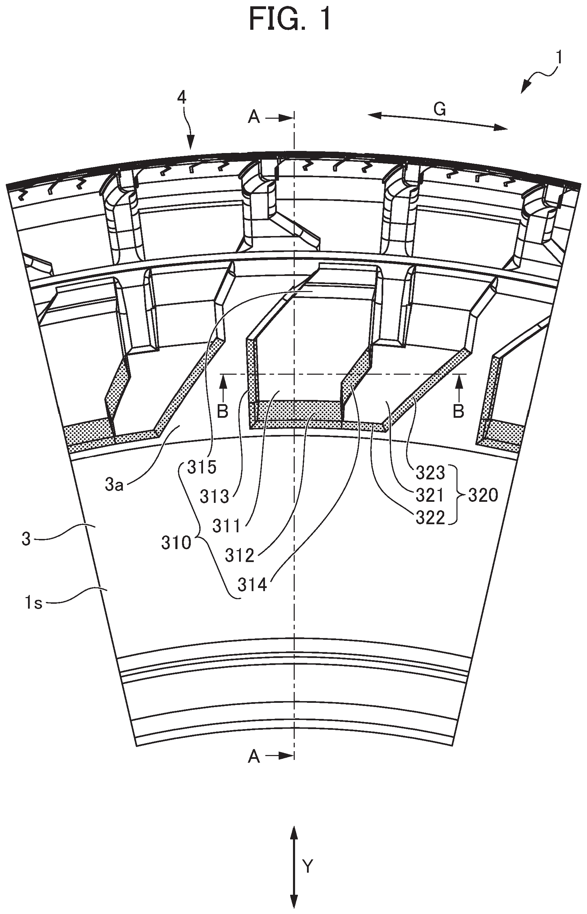

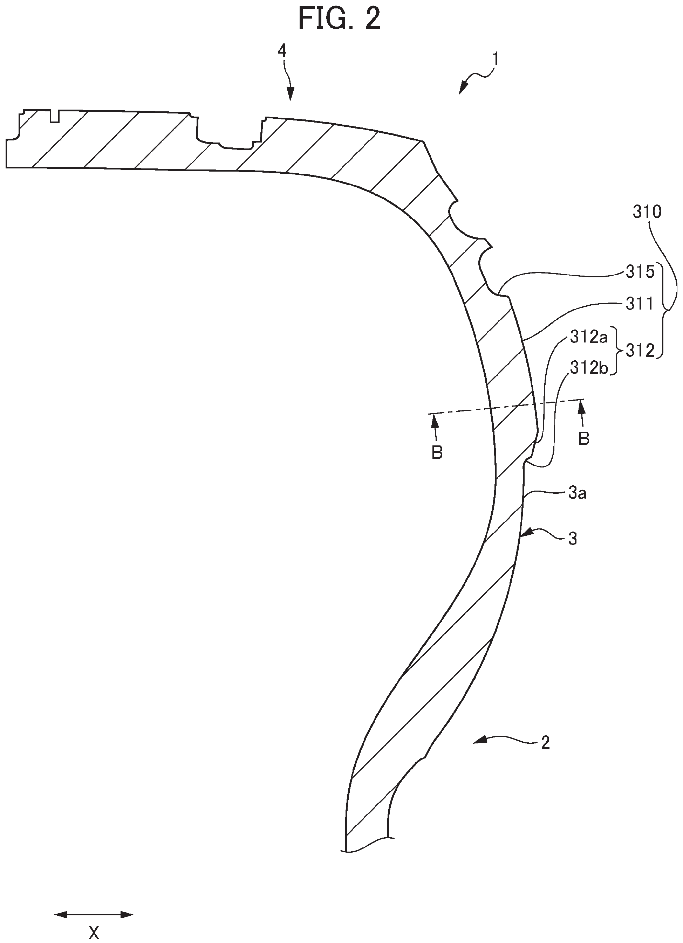

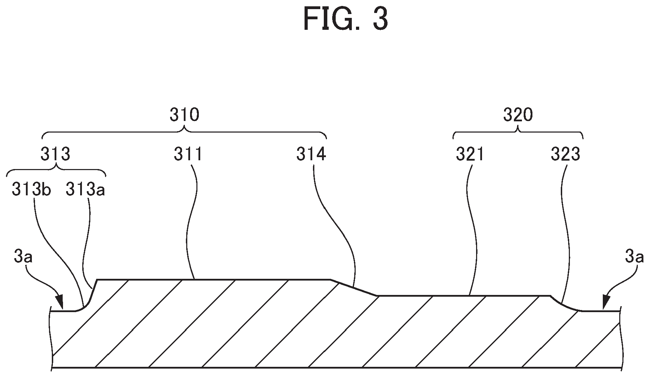

FIG. 1 is a side view illustrating a partially enlarged view of a tire 1 of the present embodiment, as viewed from a tire axial direction. FIG. 2 is a diagram illustrating a cross section of the tire 1 taken along the line indicated by the arrow A-A in FIG. 1. FIG. 3 is a diagram illustrating a cross section of the tire 1 taken along the line indicated by the arrow B-B in FIGS. 1 and 2. The tire 1 of the present embodiment is a so-called pneumatic tire in which air at a predetermined pressure is filled in an inner cavity of the tire 1. The tire 1 is not limited to a pneumatic tire and may be a non-pneumatic tire. The tire 1 of the embodiment is a pneumatic tire for passenger vehicles including light motor vehicles and SUVs. The configuration of the tire 1 of the embodiment can also be applied to pneumatic tires for other vehicle types such as light trucks, trucks, and buses. As described later, the tire 1 of the present embodiment is a tire including side blocks 310 and 320 and has a design suitable for four-wheel drive vehicles.

FIG. 1 is a side view of the tire 1, as viewed from a direction of a tire rotation axis line X. The tire axial direction, the tire circumferential direction, and the tire radial direction in the following description are defined as follows. The tire axial direction is a direction in which the tire rotation axis line X extends and corresponds to a front-back direction of the drawing sheet of FIG. 1. When viewed from the tire radial direction,
, and therefore the tire axial direction may be referred to as a left-right direction. The tire circumferential direction is an arcuate direction centered on the tire rotation axis line and is a direction along a rotation direction of the tire 1, which is indicated by the arrow G in FIG. 1. The tire radial direction is a direction perpendicular to the tire rotation axis line X and is arbitrarily indicated by the arrow Y in FIG. 1.

The tire 1 of the present embodiment includes beads 2 provided in an annular shape at inner end portions in the tire radial direction, sidewalls 3 extending from the beads toward an outer side in the tire radial direction away from the tire rotation axis line X, and a tread 4. Each of the beads and the sidewalls 3 is provided as a left-right pair including one on a side surface 1s of the tire 1 illustrated in FIG. 1, and the other one on the other side surface not illustrated in FIG. 1 and separated in the tire axial direction. The tread 4 is disposed between the left and right sidewalls 3 on the outer side in the tire radial direction. An outer circumferential surface of the tread 4 includes a tread surface that contacts a road surface.

The tire 1 is mainly formed of a plurality of types of rubber respectively constituting the beads, the sidewalls 3, and the tread 4. A carcass ply forming a skeleton of the tire 1 is disposed on an inner cavity side of the rubber constituting the entire tire 1, and further, an inner liner that retains air pressure is disposed on the inner cavity side of the carcass ply. An annular reinforcing belt is embedded inside the rubber constituting the tread 4 (the carcass ply, the inner liner, and the reinforcing belts are not illustrated). In addition to these members, various members may be provided as necessary depending on functional requirements of the tire 1.

A side block 310 and a side block 320 are provided on the sidewall 3 of the tire 1 of the present embodiment. The side block 310 and the side block 320 are provided to improve traction performance, cut resistance, and design characteristics. The side block 310 and the side block 320 are configured to protrude substantially in the tire axial direction from a sidewall reference surface 3a, which is a reference surface of the sidewall 3. Here, the sidewall reference surface 3a is a surface of the sidewall 3 excluding protruding portions such as the side block 310 and the side block 320, and is a gently curved surface.

A first region 311 is a substantially flat surface located at a position protruding from the sidewall reference surface 3a, and as a whole, has an outer peripheral shape that is an irregular polygonal shape. The first region 311 of the present embodiment is a curved surface corresponding to a curved surface obtained by offsetting the sidewall reference surface 3a. A height by which the first region 311 protrudes from the sidewall reference surface 3a is preferably between 0.5 mm and 5.0 mm inclusive. If the height by which the first region 311 protrudes from the sidewall reference surface 3a is less than 0.5 mm, the effects of improving traction performance, cut resistance, and design characteristics are all insufficient. If the height by which the first region 311 protrudes from the sidewall reference surface 3a exceeds 5.0 mm, an increase in weight of the tire 1 becomes excessive, an increase in air resistance also becomes significant, and deterioration of rolling resistance becomes significant. The height by which the first region 311 of the present embodiment protrudes from the sidewall reference surface 3a may be 3.0 mm or less.

A radially inner region 312 is disposed adjacent to the first region 311 on an inner side in the tire radial direction, and constitutes a part of a second region disposed adjacent to the first region 311. The radially inner region 312 of the present embodiment includes an inclined surface 312a and a connecting curved surface 312b. The inclined surface 312a is disposed between the first region 311 and the sidewall reference surface 3a. The inclined surface 312a can be inclined at an angle of 15 degrees or more and less than 90 degrees with respect to the first region 311 or the sidewall reference surface 3a. By providing the inclined surface 312a, when a large input is received from a road surface and the sidewall is greatly deformed, concentration of load on a specific location and resulting breakage can be avoided. The connecting curved surface 312b is a curved surface that smoothly connects the inclined surface 312a and the sidewall reference surface 3a. By providing the connecting curved surface 312b, when a large input is received from a road surface and the sidewall is greatly deformed, concentration of load on a specific location and resulting breakage can be avoided.

A circumferential region 313 is disposed adjacent to the first region 311 in the tire circumferential direction, and constitutes a part of a second region disposed adjacent to the first region 311. The circumferential region 313 of the present embodiment includes an inclined surface 313a and a connecting curved surface 313b. The inclined surface 313a is disposed between the first region 311 and the sidewall reference surface 3a. The inclined surface 313a can be inclined at an angle of 15 degrees or more and less than 90 degrees with respect to the first region 311 or the sidewall reference surface 3a. By providing the inclined surface 313a, when a large input is received from a road surface and the sidewall is greatly deformed, concentration of load on a specific location and resulting breakage can be avoided. The connecting curved surface 313b is a curved surface that smoothly connects the inclined surface 313a and the sidewall reference surface 3a. By providing the connecting curved surface 313b, when a large input is received from a road surface and the sidewall is greatly deformed, concentration of load on a specific location and resulting breakage can be avoided.

A circumferential region 314 is disposed adjacent to the first region 311 in the tire circumferential direction on a side opposite to the circumferential region 313, and constitutes a part of a second region disposed adjacent to the first region 311. The circumferential region 314 is disposed at a position connecting the first region 311 of the side block 310 and a first region 321 of the side block 320. The circumferential region 314 of the present embodiment is formed as an inclined surface and does not include a curved surface corresponding to the connecting curved surface 313b of the circumferential region 313. The circumferential region 314 can be inclined at an angle of 15 degrees or more and less than 90 degrees with respect to the first region 311 or the first region 321.

A radially outer region 315 is disposed adjacent to the first region 311 on an outer side in the tire radial direction. The radially outer region 315 can be configured as an inclined surface inclined from the first region 311 toward an inner side in the tire axial direction.

A plurality of protrusions 110 protruding from the second region reference surface SS, which is a reference surface of the second region, are arranged in the radially inner region 312, the circumferential region 313, and the circumferential region 314, which are second regions disposed adjacent to the first region 311. Here, the second region reference surface SS is a base surface of each of the radially inner region 312, the circumferential region 313, and the circumferential region 314. For example, as illustrated in FIG. 3, an inclined surface 313a and a connecting curved surface 313b are provided in the radially inner region 313, and these surfaces constitute the second region reference surface SS of the radially inner region 312.

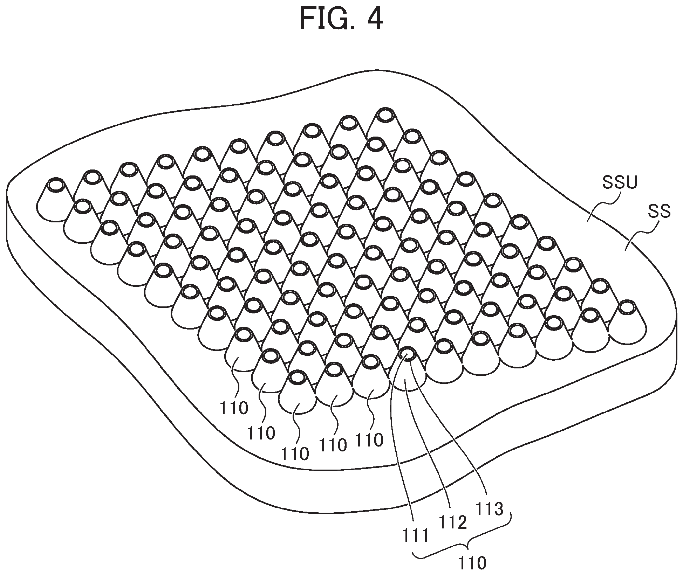

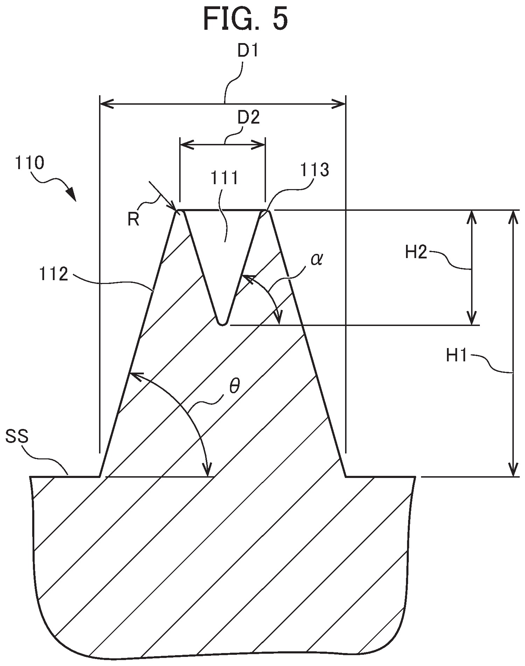

FIG. 4 is a perspective view illustrating a plurality of protrusions 110 disposed in the second region. FIG. 5 is a cross-sectional view illustrating the plurality of protrusions 110 disposed in the second region, sectioning through the center of a protrusion 110. The plurality of protrusions 110 are provided so as to protrude from the second region reference surface SS of the second region, and FIGS. 4 and 5 illustrate a state in which the plurality of protrusions 110 protrude from a UV-developed reference surface SSU obtained by UV development of the second region reference surface SS of the second region. In FIG. 5, only one protrusion 110 is illustrated in the cross section. The UV-developed reference surface SSU is a surface obtained by two-dimensionally developing each three-dimensional second region. In the present embodiment, since an outer shape of the protrusion 110 has a substantially conical shape, the second region reference surface SS is an actually existing surface; however, for example, when the outer shape of the protrusion 110 has a substantially quadrangular pyramidal shape or the like, the second region reference surface SS may be substantially eliminated by being entirely occupied by the protrusions 110 and may become a virtual surface.

The plurality of protrusions 110 are arranged so as to protrude from the second region reference surface SS substantially toward an outer side in the tire axial direction. In the present embodiment, as illustrated in FIG. 4, the protrusions 110 are regularly arranged in a plurality of rows. Specifically, in each row, the protrusions 110 are closely arranged at equal intervals, and adjacent rows are arranged with relative positions shifted by a half pitch to form a closest-packed arrangement. The arrangement of the protrusions 110 is not limited to the closest-packed arrangement, and for example, the protrusions 110 may be arranged with predetermined intervals therebetween without being closely arranged, or may be randomly arranged within a range in which a predetermined arrangement density can be maintained. Among the protrusions 110, a tip position of a protrusion 110 located furthest toward an outer side in the tire axial direction is preferably located on an inner side in the tire axial direction relative to the first region 311. That is, it is preferable that tips of all protrusions 110 are located at positions that do not protrude beyond the first region 311. This is to prevent damage to the protrusions 110 and to prevent a sense of incongruity from occurring at a boundary between the first region 311 and the second region. The protrusion 110 of the present embodiment includes a recess 111, a conical body portion 112, and an outer edge portion 113.

The recess 111 is located at a center of the protrusion 110 when the protrusion 110 is viewed from above, and has a conical inner surface (inclined surface). A bottom portion of the recess 111 is formed as a minute curved surface having a substantially hemispherical inner surface shape. A shape of the recess 111 may be, for example, an inclined surface having an inner surface shape of a pyramidal surface, or may be a spherical surface, in which the specific shape of the recess 111 may be any shape.

The conical body portion 112 forms an outer periphery of the protrusion 110. The conical body portion 112 extends in a conical shape in a direction in which the protrusion 110 protrudes from the second region reference surface SS. Here, the term "conical" refers to a shape that widens toward a distal end, such as a conical surface. In a cross-sectional shape illustrated in FIG. 5, which is orthogonal to the second region reference surface SS, it is preferable that an inclined surface of the conical body portion 112 and an inclined surface of the recess 111 are symmetrical, in which the inclined surfaces are symmetrical in the protrusion 110 of the present embodiment. Here, the inclined surface of the conical body portion 112 and the inclined surface of the recess 111 being symmetrical means that the inclined surfaces are in a line-symmetrical relationship in the cross-sectional shape illustrated in FIG. 5. Therefore, when an angle formed by the inclined surface of the conical body portion 112 with respect to the second region reference surface SS is denoted as θ and an angle formed by the inclined surface of the recess 111 with respect to the second region reference surface SS is denoted as α, the relationship of θ = α is satisfied. By adopting such a relationship, a light reflection angle at the conical body portion 112 and a light reflection angle at the recess 111 become substantially identical, optical design including light absorption can be easily carried out, and a light absorption effect can be made uniform.

The outer edge portion 113 surrounds the recess 111 and forms a tip portion of the protrusion 110. In the example illustrated in FIG. 5, the outer edge portion 113 is formed by a curved surface shape that smoothly connects the recess 111 and the conical body portion 112. For example, in the cross section illustrated in FIG. 5, the outer edge portion 113 can be configured to smoothly connect the recess 111 and the conical body portion 112 with a radius of curvature R ≈ 0.01 mm. The outer edge portion 113 is not limited to a curved surface shape and may be configured as a flat surface. That is, the outer edge portion 113 may be, for example, a flat surface parallel to the second region reference surface SS.

A part of light reaching the recess 111 of the protrusion 110 is reflected by the inclined surface of the recess 111, and the reflected light repeatedly undergoes further reflection inside the recess 111. By such repeated reflection of light occurring inside the recess 111, light reaching the recess 111 is gradually attenuated and absorbed. A part of the light reaching the conical body portion 112 of the protrusion 110 is reflected by the inclined surface of the conical body portion 112, and a part of the reflected light reaches and is reflected by the conical body portion 112 of another protrusion 110 disposed nearby, where this process is repeated. By such repeated reflection of light occurring at the conical body portions 112 of the plurality of protrusions 110, light reaching the conical body portions 112 is gradually attenuated and absorbed. Therefore, since a part of light incident on the second region in which the plurality of protrusions 110 are provided is absorbed and does not emit to the outside, when the second region in which the plurality of protrusions 110 are provided is visually recognized, the second region can be visually recognized as being darker, that is, having lower brightness, than the sidewall reference surface 3a and the first region 311, which are outer surfaces of the sidewall 3 that reflect surrounding light.

Brightness of the tire 1 can be evaluated by a brightness index. This brightness index can be measured using a color reader CR-20 manufactured by Konica Minolta Japan, Inc. A sample can have a size capable of covering a measurement aperture (with a diameter of 8 mm), for example. An observation light source is D65, and an L component value in an L*a*b* display system (a color space) is used as the brightness index. As the brightness index becomes smaller, the appearance becomes visually blacker (that is, black density increases and contrast becomes higher), and therefore, for the purpose of making appear black in the present embodiment, a smaller brightness index is preferable. Specifically, in order to obtain a visually black effect, the brightness index is preferably 15 or less, and more preferably 10 or less. The first region has a brightness index exceeding 15.

Specific shapes and dimensions of the protrusion 110 can be appropriately selected; however, preferred dimensions for the protrusion 110 exemplified in the present embodiment are described below. A maximum outer diameter of the protrusion 110 is denoted as D1, a maximum inner diameter of the recess 111 is denoted as D2, a height of the protrusion 110 from the second region reference surface SS is denoted as H1, and a depth of the recess 111 is denoted as H2. A radius of curvature of a curved surface of the outer edge portion 113 is denoted as R. In the cross section illustrated in FIG. 5, an angle formed by a slanted surface of the conical body portion 112 with respect to the second region reference surface SS is denoted as θ. The protruding height H1 of the protrusion 110 is preferably between 0.6 mm and 1.4 mm inclusive, and more preferably between 1.0 mm and 1.3 mm inclusive. The depth H2 of the recess 111 is preferably between 30% and 70% inclusive of the protruding height H1 of the protrusion 110 (that is, a depth ratio is between 0.3 and 0.7 inclusive). The radius of curvature R is preferably 0.02 mm or less, and more preferably 0.01 mm or less. The angle θ is preferably between 60° and 80° inclusive, and more preferably between 65° and 75° inclusive. The maximum outer diameter D1 of the protrusion 110 and the maximum inner diameter D2 of the recess 111 can be arbitrarily determined within a range satisfying numerical values of other portions described above; however, for example, the maximum outer diameter D1 is preferably between 1.1 mm and 1.2 mm inclusive, and the maximum inner diameter D2 is preferably between 0.5 mm and 1.0 mm inclusive.

The specific configuration of the protrusion 110 described above can be appropriately modified and is not limited to the protrusion of the embodiment. By arranging a large number of minute protrusions in the second region, the second region can be visually recognized with lower brightness than the first region. That is, a specific configuration of the protrusions disposed in the second region can be appropriately selected as long as the protrusions are capable of allowing the second region to be visually recognized with lower brightness than the first region.

In FIG. 1, hatching is applied to a radially inner region 312, a circumferential region 313, and a circumferential region 314, in which the protrusions 110 are provided around the side block 310. As illustrated in FIG. 1, the radially inner region 312, the circumferential region 313, and the circumferential region 314, which are second regions disposed adjacent to the first region 311, have lower brightness than the first region 311 and are observed as being darker. As a result, the radially inner region 312, the circumferential region 313, and the circumferential region 314 appear like shaded portions relative to the first region 311. Accordingly, the first region 311 is observed as if being raised, and an effect can be obtained in which the side block 310 appears more three-dimensional.

A length of the radially inner region 312 in the tire radial direction is longer than lengths of the circumferential region 313 and the circumferential region 314 in the tire circumferential direction. Here, the length of the radially inner region 312 in the tire radial direction refers to a length (width) of the radially inner region 312 in the tire radial direction when viewed from a normal direction of the sidewall reference surface 3a. Similarly, the lengths of the circumferential region 313 and the circumferential region 314 in the tire circumferential direction refer to lengths (or widths) of the circumferential region 313 and the circumferential region 314 in the tire circumferential direction when viewed from the normal direction of the sidewall reference surface 3a. By making the length of the radially inner region 312 in the tire radial direction longer than the lengths of the circumferential region 313 and the circumferential region 314 in the tire circumferential direction, the effect in which the side block 310 appears more three-dimensional can be further enhanced.

When sunlight or the like is incident on an actual three-dimensional object, a long shadow is generated on a side opposite to a direction in which a light source is disposed, and a shadow generated in a portion along a traveling direction of light from the light source becomes short. By making the length of the radially inner region 312 in the tire radial direction longer than the lengths of the circumferential region 313 and the circumferential region 314 in the tire circumferential direction, a manner in which shadows are generated on an actual three-dimensional object can be simulated, and an appearance can be obtained as if light were actually incident and shadows were generated.

In a state in which the tire 1 is mounted on a vehicle, an upper portion of the tire 1 is more noticeable than a lower portion of the tire 1. Accordingly, in the tire 1 of the present embodiment, in order to simulate a manner in which shadows are generated when sunlight is incident from above on the side block 310 positioned on an upper side in a state in which the tire 1 is mounted on a vehicle, the length of the radially inner region 312 in the tire radial direction is made longer than the lengths of the circumferential region 313 and the circumferential region 314 in the tire circumferential direction.

From a similar viewpoint, in the tire 1 of the present embodiment, the protrusions 110 are not provided in the radially outer region 315. In the first region 311, the protrusions 110 are not provided, and the protrusions 110 are also not provided on a surface of the sidewall 3 located on an inner side in the tire radial direction relative to the second region that is the radially inner region 312. Accordingly, if the protrusions 110 were provided in the radially outer region 315 so as to appear darker than the first region 311, an appearance different from a manner in which shadows are generated when sunlight is incident from above on the side block 310 positioned on an upper side in a state in which the tire 1 is mounted on a vehicle would be obtained, resulting in a lack of consistency and a high possibility of causing a sense of incongruity.

The side block 320 is disposed adjacent to the side block 310. The side block 320 differs from the side block 310 in that a height of a first region 321 is lower than that of the first region 311; however, the side block 320 basically has a configuration similar to that of the side block 310. The side block 320 includes the first region 321, a radially inner region 322 as a second region disposed adjacent to the first region 321, and a circumferential region 323.

The first region 321 is a substantially flat surface located at a position protruding from the sidewall reference surface 3a, and as a whole, has an outer peripheral shape configured as an irregular polygonal shape. The first region 321 of the present embodiment is a curved surface corresponding to a curved surface obtained by offsetting the sidewall reference surface 3a. The first region 321 is configured to be lower than the first region 311.

The radially inner region 322 is disposed adjacent to the first region 321 on an inner side in the tire radial direction and constitutes a part of a second region disposed adjacent to the first region 321. The circumferential region 323 is disposed adjacent to the first region 321 in the tire circumferential direction and constitutes a part of a second region disposed adjacent to the first region 321. In the radially inner region 322 and the circumferential region 323, a plurality of protrusions 110 are arranged similarly to the side block 310. The radially inner region 322 and the circumferential region 323 may be configured without providing the protrusions 110, and the protrusions may be provided only in the radially inner region 312, the circumferential region 313, and the circumferential region 314. In this case, the side block 310 is emphasized and appears more three-dimensional. As the second region in which the protrusions 110 are provided, it is preferable to include an inclined surface disposed between the first region 311 or 321 and the sidewall reference surface 3a, and disposed adjacent to the first region on an inner side in the tire radial direction.

Although the side block 320 protrudes from the sidewall reference surface 3a by a smaller height than the side block 310, since a plurality of protrusions 110 are arranged in the radially inner region 322 and the circumferential region 323, the side block 320 is observed as being more three-dimensional than it actually is.

As described above, in the tire 1 of the present embodiment, by arranging a plurality of protrusions 110 in the second region, the side block 310 and the side block 320 are observed as if protruding further than an actual amount of protrusion from the sidewall reference surface 3a. Accordingly, even if an amount of protrusion of the side block 310 and the side block 320 from the sidewall reference surface 3a is made smaller than in the conventional art, the side block 310 and the side block 320 are observed as having a protrusion amount equivalent to or greater than that of the conventional art. Therefore, while maintaining design characteristics equivalent to or higher than those of the conventional art, the amount of protrusion of the side block 310 and the side block 320 from the sidewall reference surface 3a can be made smaller than in the conventional art. As a result, the tire 1 of the present embodiment can be reduced in weight, air resistance can also be reduced, and rolling resistance can be reduced.

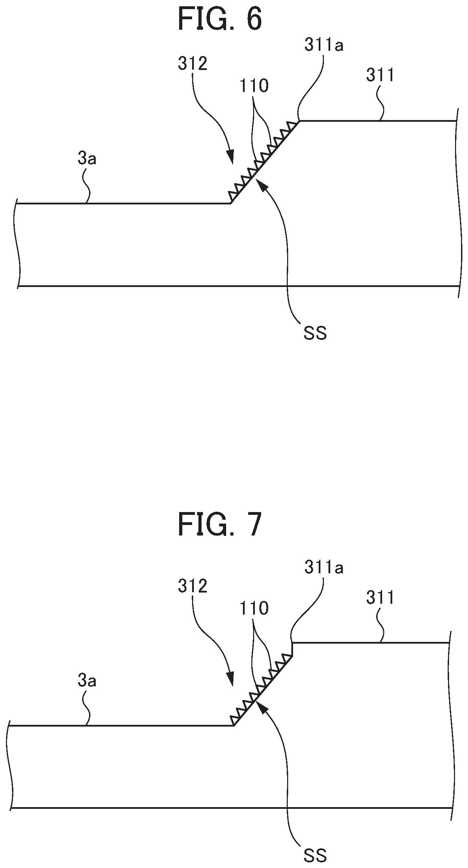

Here, the second region reference surface SS on which the protrusions 110 are provided will be described. FIG. 6 is a schematic diagram illustrating a first example of the second region reference surface SS. In the description of FIG. 6 and FIGS. 7 to 9 described later, a case of the radially inner region 312 will be described; however, the same applies to other second regions. The protrusions 110 are schematically illustrated as simple triangles. The second region reference surface SS on which the protrusions 110 are provided may be, for example, an inclined surface that is connected to an edge portion 311a of the first region 311 and is inclined from the edge portion 311a toward the sidewall reference surface 3a, as illustrated in FIG. 6. In FIG. 6, only the second region reference surface SS corresponding to the inclined surface 312a is illustrated, and the second region reference surface SS corresponding to the connecting curved surface 312b is omitted. With this configuration, the protrusions 110 can be disposed over a wide range.

FIG. 7 is a schematic diagram illustrating a second example of the second region reference surface SS. The second region reference surface SS on which the protrusions 110 are provided may be, for example, an inclined surface that is inclined from a position one step lower than the edge portion 311a of the first region 311 toward the sidewall reference surface 3a, as illustrated in FIG. 7. With this configuration, the protrusions 110 are less likely to receive external damage, and durability of the second region in which the protrusions 110 are provided can be improved.

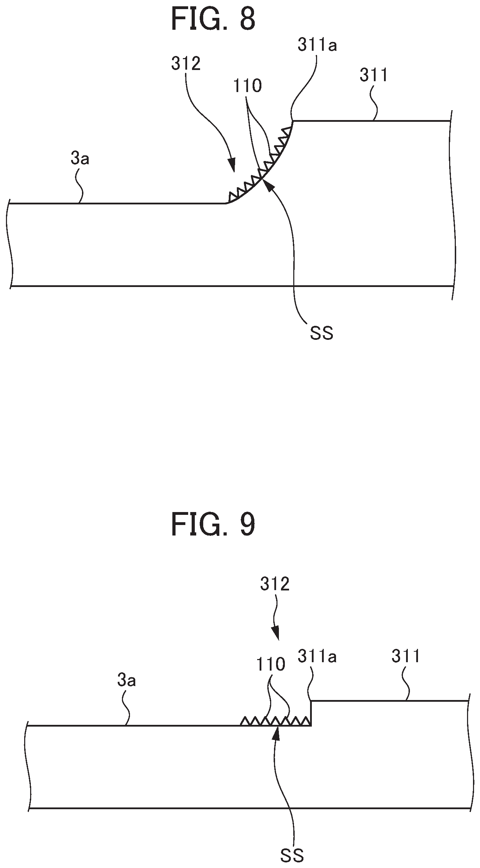

FIG. 8 is a schematic diagram illustrating a third example of the second region reference surface SS. The second region reference surface SS on which the protrusions 110 are provided may be, for example, a curved surface that is concavely curved from the edge portion 311a of the first region 311 toward the sidewall reference surface 3a, as illustrated in FIG. 8. As a modification of this example, similarly to the example of FIG. 7, the second region reference surface SS may be provided from a position one step lower than the edge portion 311a of the first region 311. With this configuration, the protrusions 110 are less likely to receive external damage, and durability of the second region in which the protrusions 110 are provided can be improved.

FIG. 9 is a schematic diagram illustrating a fourth example of the second region reference surface SS. The second region reference surface SS on which the protrusions 110 are provided may be, for example, the same surface as the sidewall reference surface 3a, as illustrated in FIG. 9. This configuration can be suitably used when a height by which the first region 311 protrudes from the sidewall reference surface 3a is small, as illustrated in FIG. 9. By reducing the height by which the first region 311 protrudes from the sidewall reference surface 3a, it can be made less likely for heat to be trapped in the side block 310. Since weight reduction can be achieved and air resistance can be reduced, an effect of reducing rolling resistance can be further enhanced.

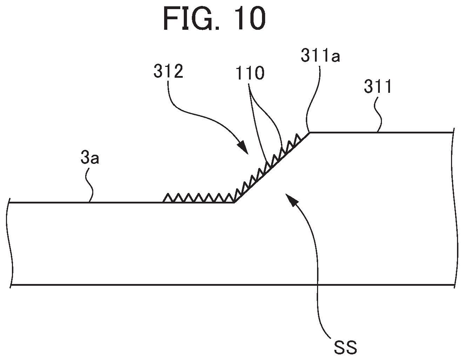

FIG. 10 is a schematic diagram illustrating a fifth example of the second region reference surface SS. The second region reference surface SS on which the protrusions 110 are provided may include a plurality of surfaces, for example, as illustrated in FIG. 10. In the example illustrated in FIG. 10, the second region reference surface SS includes an inclined surface that is connected to the edge portion 311a of the first region 311 and is inclined from the edge portion 311a toward the sidewall reference surface 3a, and a part of the sidewall reference surface 3a. In the example illustrated in FIG. 10, the protrusions 110 provided on the inclined surface have a shape that allows demolding in a normal direction of the sidewall reference surface 3a. That is, the protrusions 110 provided on the inclined surface have a shape in which all surfaces of the protrusions 110 are visible when viewed from the normal direction of the sidewall reference surface 3a. Accordingly, formation of the protrusions 110 can be facilitated.

The tire 1 according to the above-described embodiment can achieve the following effects.
(1) The tire 1 according to the present embodiment includes the tread 4 and the sidewall 3, in which the sidewall 3 includes the first regions 311 and 321 located at positions protruding from the sidewall reference surface 3a which is a reference surface of the sidewall 3, and the second regions (312, 313, 314, 322, and 323) disposed adjacent to the first regions 311 and 321. The plurality of protrusions 110 protruding from the second region reference surface SS which is a reference surface of the second regions (312, 313, 314, 322, and 323) are arranged in the second regions (312, 313, 314, 322, and 323).

Accordingly, since the side blocks 310 and 320 are observed as protruding more than an actual amount of protrusion, the amount of protrusion of the side blocks 310 and 320 can be reduced. Therefore, it is possible to provide a tire that has high design characteristics, can be reduced in weight, and can reduce rolling resistance.

(2) In the tire 1 as described in (1), the second regions (312, 313, 314, 322, and 323) include the inclined surfaces disposed between the first regions 311 and 321 and the sidewall reference surface 3a.

Accordingly, when a large input is received from a road surface and the sidewall is greatly deformed, concentration of load on a specific location and resulting breakage can be avoided.

(3) In the tire 1 as described in (1) or (2), the second regions (312, 313, 314, 322, and 323) include the radially inner regions 312 and 322 disposed adjacent to the first regions 311 and 321 on the inner sides in the tire radial direction, and the circumferential regions 313, 314, and 323 disposed adjacent to the first regions 311 and 321 in the tire circumferential direction. The length of the radially inner regions 312 and 322 in the tire radial direction is longer than the lengths of the circumferential regions 313, 314, and 323 in the tire circumferential direction.

Accordingly, a manner in which shadows are generated on an actual three-dimensional object can be simulated, and an effect in which the side blocks 310 and 320 appear more three-dimensional can be further enhanced.

(4) In the tire as described in any one of (1) to (3), the second regions (312, 313, 314, 322, and 323) can be visually recognized with lower brightness than the first regions 311 and 321.

Accordingly, an effect in which the side blocks 310 and 320 appear more three-dimensional can be further enhanced.

(5) In the tire as described in any one of (1) to (4), the height by which the first regions 311 and 321 protrude from the sidewall reference surface 3a is between 0.5 mm and 5.0 mm inclusive.

Accordingly, an improvement of traction performance, improvement of cut resistance, and improvement of design characteristics can be achieved, and a reduction in rolling resistance can also be achieved.

(6) In the tire as described in (2), the inclined surfaces are connected to the sidewall 3 via a curved surface.

Accordingly, when a large input is received from a road surface and the sidewall is greatly deformed, concentration of load on a specific location and resulting breakage can be avoided.

### (Modified Forms)

The present disclosure is not limited to the embodiments described above, and various modifications and changes are possible, and such modifications and changes are also within the scope of the present disclosure.

### (Modified Form 1)

In the embodiment, an example has been described in which both an inclined surface of the conical body portion 112 and an inclined surface of the recess 111 of the protrusion 110 are conical surfaces. The present disclosure is not limited thereto and, for example, at least one of the inclined surface of the conical body portion 112 and the inclined surface of the recess 111 may be formed by a pyramidal surface such as a quadrangular pyramid or a triangular pyramid.

### (Modified Form 2)

In the embodiment, an example has been described in which the protrusion 110 has a conical shape. The present disclosure is not limited thereto and, for example, the protrusion may have a rectangular shape, or may be a protrusion representing characters or figures. The protrusion may not necessarily include a shape corresponding to the recess 111.

### (Modified Form 3)

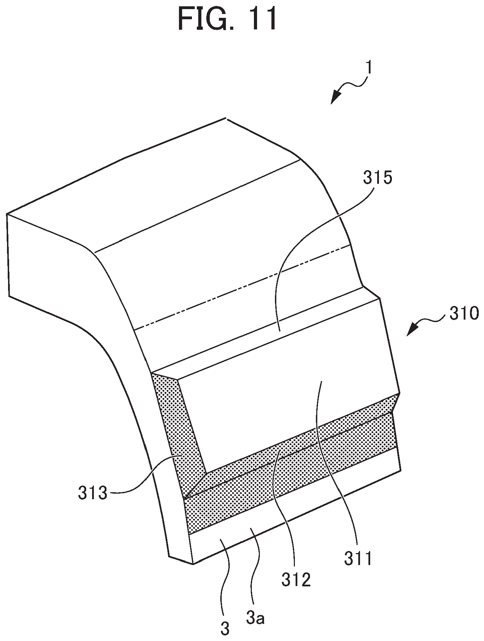

In the embodiment, an example has been illustrated in which the side block 310 has a complex shape. The present disclosure is not limited thereto, and the side block 310 may have a simpler shape. FIG. 11 is a schematic diagram illustrating a modified form of the side block 310. For example, the side block 310 may have a more simplified configuration as illustrated in FIG. 11. The side block 310 of FIG. 11 includes a first region 311, a radially inner region 312 as a second region disposed adjacent to the first region 311, circumferential regions 313 and 314, and a radially outer region 315. The radially inner region 312 includes, in addition to an inclined surface inclined from the first region 311 toward the sidewall reference surface 3a, a region that is the same surface as the sidewall reference surface 3a. In FIG. 11, protrusions 110 are provided in hatched regions, that is, the radially inner region 312, the circumferential region 313, and the circumferential region 314. By including, as the radially inner region 312 in which the protrusions 110 are provided, not only the inclined surface inclined from the first region 311 toward the sidewall reference surface 3a, but also the region that is the same surface as the sidewall reference surface 3a, a region that appears darker like a shadow becomes longer. Accordingly, the side block 310 can be made to appear more three-dimensional.

The embodiments and the modified forms may be appropriately combined; however, detailed descriptions thereof are omitted. The present disclosure is not to be limited by the embodiments described above.

## Claims

1. A tire (1) comprising a tread (4) and a sidewall (3),
wherein the sidewall (3) includes:
a first region (311, 321) located at a position protruding from a sidewall reference surface (3a) which is a reference surface of the sidewall (3); and
a second region (312, 313, 314, 322, 323) disposed adjacent to the first region (311, 321), and
wherein a plurality of protrusions (110) protruding from a second region reference surface (SS) which is a reference surface of the second region (312, 313, 314, 322, 323) are arranged in the second region (312, 313, 314, 322, 323).

2. The tire (1) according to claim 1,
wherein the second region (312, 313, 314, 322, 323) includes an inclined surface (312a, 313a) disposed between the first region (311, 321) and the sidewall reference surface (3a).

3. The tire (1) according to claim 1 or 2,
wherein the second region (312, 313, 314, 322, 323) includes:
a radially inner region (312, 322) disposed adjacent to the first region (311, 321) on an inner side in a tire radial direction; and
a circumferential region (313, 314, 323) disposed adjacent to the first region (311, 321) in a tire circumferential direction, and
wherein a length of the radially inner region (312, 322) in the tire radial direction is longer than a length of the circumferential region (313, 314, 323) in the tire circumferential direction.

4. The tire (1) according to claim 1 or 2,
wherein the second region (312, 313, 314, 322, 323) is visually recognizable with lower brightness than the first region (311, 321).

5. The tire (1) according to claim 1 or 2,
wherein a height by which the first region (311, 321) protrudes from the sidewall reference surface (3a) is between 0.5 mm and 5.0 mm inclusive.

6. The tire (1) according to claim 2,
wherein the inclined surface (312a, 313a) is connected to the sidewall (3) via a curved surface.
